(19) Europäisches Patentamt

European Patent Office

Office européen des brevets

(11) Veröffentlichungsnummer: **0 320 587 B1**

(12) # EUROPÄISCHE PATENTSCHRIFT

(45) Veröffentlichungstag der Patentschrift: **13.05.92**

(21) Anmeldenummer: **88116654.0**

(22) Anmeldetag: **07.10.88**

(51) Int. Cl.⁵: **F27B 1/02**, C21C 5/56, C22B 7/00

(54) **Verfahren zum Schmelzen von Metallschrott und Vorrichtung zur Durchführung des Verfahrens.**

(30) Priorität: **14.12.87 DE 3742349**

(43) Veröffentlichungstag der Anmeldung:
**21.06.89 Patentblatt 89/25**

(45) Bekanntmachung des Hinweises auf die
Patenterteilung:
**13.05.92 Patentblatt 92/20**

(84) Benannte Vertragsstaaten:
**DE FR GB IT NL**

(56) Entgegenhaltungen:
**EP-A- 0 031 160       WO-A-88/08411
DE-A- 3 610 498       FR-A- 1 435 545
US-A- 4 291 634       US-A- 4 316 739**

**IRON AND STEEL ENGINEER, Band 62, Nr. 10, Oktober 1985, Seiten 16-22, Pittsburgh, Pennsylvania, US; J.E. BONESTELL et al.: "EOF (energy optimizing furnace) steelmaking"**

**GIESSEREI, Band 74, Nr. 17, 17. August 1987, Seiten 493-497, Düsseldorf, DE; P.W. BARDENHEUER: "Schnmelzen von Gusseisen in einem gasgefeuerten Kupolofen"**

(73) Patentinhaber: **DEUTSCHE VOEST-ALPINE INDUSTRIEANLAGENBAU GMBH
Neusser Strasse 111
W-4000 Düsseldorf 1(DE)**

(72) Erfinder: **Hubig, Markus, Dipl.-Ing.
Eckenerstrasse 7
W-5100 Aachen(DE)**
Erfinder: **Maschlanka, Walter, Dr. Dipl.-Ing.
Zeppelinstrasse 2
W-7560 Gaggenau(DE)**

(74) Vertreter: **Pfenning, Meinig & Partner
Mozartstrasse 17
W-8000 München 2(DE)**

## Beschreibung

Die Erfindung bezieht sich auf ein Verfahren zum Schmelzen von Metallschrott nach dem Oberbegriff des Patentanspruchs 1 und auf eine Vorrichtung zur Durchführung des Verfahrens.

Für den Bereich der Gießereitechnik sind Verfahren zum Aufschmelzen von Eisen zur Roheisenherstellung unter Verwendung von kokslos betriebenen Kupolöfen ganz allgemein bekannt.

So beschreibt beispielsweise die DE-PS 22 04 042 ein Verfahren zum Schmelzen von Eisen in einem vertikalen Schachtofen ohne die Verwendung von Koks und unter Verwendung einer fluiden Brennstoff/Luft-Mischung, die außerhalb des Ofens in Brennern verbrannt wird, die nahe dem Unterteil des Ofens angeordnet sind, wobei Eisenschrott und Gußeisen in das Oberende des Ofens chargiert und aufgeschmolzen wird, indem überhitztes Material durch ein innerhalb des Schachtes angeordnetes Bett aus losen feuerfesten Körpern tropft und diese feuerfesten Körper durch die Verbrennungsprodukte der Brenner aufgeheizt werden, bevor die nach oben streichenden Verbrennungsprodukte das entgegenkommende Metall schmelzen und geschmolzenes Metall am Boden des Ofens abgestochen werden kann. Hierbei werden die Verbrennungsprodukte von allen Seiten her in den freien Raum des Ofens aus mehreren Brennern eingeleitet, die sich vollständig unterhalb des Bettes der feuerfesten Körper befinden, wobei die Temperatur der Gase im Bereich des Bettes bei maximal 1600°C gehalten wird. Der eigentliche Ofenherd ist durch eine untere zylindrische Fortsetzung des zylindrischen Ofenschachtes mit gleichem Durchmesser gebildet. Schacht und Herd sind voneinander durch einen wassergekühlten Rost mit dem darauf angeordneten Bettmaterial getrennt. Im Fuß des Ofens sammelt sich das durch den Rost tropfende geschmolzene Metall und kann dort kontinuierlich oder intermittierend über ein Stichloch abgezogen werden, was gleichermaßen für die auf dem geschmolzenen Metall schwimmende Schlacke gilt.

Die Ofenanordnung ist bei diesem bekannten Hayes-bzw. Taft-Ofen so getroffen, daß die Verbrennungsgase von den Brennkammern sich in einer mittleren unteren Zone des Schachtes im sogenannten Herdbereich unterhalb des Rostes treffen und von dort nach oben strömend das Feuerfestbett aufheizen, um nachfolgend im Gegenstrom das Einsatzmaterial zu erwärmen.

Eine sinnvolle Weiterentwicklung dieses kokslosen Kupolofens für die Gießereitechnologie bildet der bekannte Düker-Ofen, der gleichfalls mit einer zylindrischen Schachtanordnung arbeitet, dessen unterer, unterhalb des wassergekühlten Rostes liegender Teil mit gleichbleibendem Querschnitt den Ofenherd bildet, in den durch die Ofenwand hindurch, etwa radial die Ölbrenner einmünden. Das sich im Bodenbereich ansammelnde flüssige Roheisen kann über eine Siphonanordnung abgezogen und einem Überhitzer zugeführt werden.

Ein Heizöl- oder gasbeheizter Schachtofen zum Aufschmelzen und Überhitzen von Metall, speziell von Gußeisen und Kupfer ist desweiteren in der DE-PS 38 43 678 beschrieben, der mit Zusatz von Satzkoks arbeitet und mehrere außenliegende Brennerkammern aufweist, die über wassergekühlte Düsen mit dem Ofeninneren in Verbindung stehen, wobei sich die Brennerkammern und die Düsen in der durch den Satzkoks gebildeten Durchtropfzone befinden. Bei diesem bekannten Schachtofen wird theoretisch kein Schlackenschutz für das abtropfende Eisen benötigt, da dieser durch die reduzierende Verbrennung von Heizöl und Erdgas sichergestellt wird.

Auch soll im Zusammenhang mit Einschmelzverfahren für Schrott noch auf einen in der DE-PS 23 27 073 beschriebenen Schachtofen hingewiesen werden, dessen Einschmelzgefäß sich im Querschnitt nach unten kontinuierlich, wenn auch nur leicht, vergrößert und bei dem die wiederum radialen Brenneranordnungen im unmittelbaren Bodenbereich des Einschmelzgefäßes in Stellung gebracht sind, dort wo sich die Liquidusphase sammelt. Das flüssige Roheisen wird über einen Abfluß im Boden kontinuierlich abgezogen. Eine wenn auch nur hinlängliche Trennung zwischen dem festen Einsatzmaterial, wie z.B. Eisen-Schrott oder dgl. und der Liquidusphase wird hier wegen des gänzlichen Fehlens einer trennenden Rostanordnung durch einen zentralen Sockel im Bodenbereich erreicht, über den die Wärmeübertragung zwischen flüssigem Schmelzgut und der Einsatzmaterialsäule herabgesetzt, oder doch wenigstens so gering wie möglich gehalten werden soll.

Den vorstehend beschriebenen, kokslos betriebenen Gießereischachtöfen ist gemeinsam, daß der Ofenschacht und der Ofenherd ein einziges im wesentlichen im Querschnitt zylindrisches Bauelement darstellen, also einen einfachen Rohrschacht bilden. Der untere Abschnitt dieses Rohrschachtes stellt den eigentlichen Ofenherd mit minimierten Flächen für die Ofenwandung dar.

Demgegenüber besteht die Schmelzaggregatanordnung des bekannten Flaven-Ofens aus zwei sich bereits im äußeren Aufbau voneinander abhebenden Konstruktionseinheiten, nämlich einem wiederum senkrecht stehenden im Querschnitt zylindrischen Ofenschacht und einem hierzu waagerecht liegenden Ofenherd in dessen eines Ende der Ofenschacht über einem wassergekühlten Rost einmündet und dessen anderes Ende den Brenner aufnimmt, dessen Flamme auf den Abstichbereich der Liquidusphase gerichtet ist und dessen Flammengase waagerecht über das Flüssigbad geführt zur Rostanordnung strömen, um von dort wiederum im Gegenstromprinzip innerhalb des Ofenschachtes aufzusteigen. Der tunnelförmige Herdraum gibt für das Eisenbad eine relativ große Oberfläche vor, über die das heiße Brenngas hinwegstreichen kann, ohne daß jedoch der wesentliche Teil des ff-Materials des Herdofens direkt von der Flamme des Brenners beaufschlagt wird.

Der Anteil der Wärmezufuhr durch Wärmeabstrahlung von der Herdwand her ist somit bei dieser bekannten Anordnung minimal.

Schließlich ist noch ein Verfahren zum Schmelzen von Metall in einem Schachtofen unter Verwendung eines flüssigen oder gasförmigen Brennstoffes mit einem am unteren Ende des Schachtofens befindlichen Rost zur Stützung des in den Schachtofen eingebrachten, noch nicht geschmolzenen Metalls bekannt (DE-OS 36 10 498), bei dem das zur Verbrennung des Brennstoffes benötigte sauerstoffhaltige Gas vor der Verbrennung erwärmt wird, und bei dem in den unteren Teil eines senkrechten Ofenschachtes gleichfalls ein tunnelartiger Ofenherd waagerecht einmündet. Die Brenner sind in der der Ofenschachteinmündung entgegengesetzt liegenden Stirnseite in Stellung gebracht, so daß dessen Flamme in Längsrichtung des Ofenherdes direkt auf die Eintrittsöffnung in den Ofenschacht gerichtet ist, so daß sie den gesamten Innenraum und damit die Herdwandungen bzw. dessen ff-Material mit Wärme beaufschlagt, die dann in Form von Strahlungswärme auf die Flüssigeisenoberfläche abstrahlen kann.

Die bisher bekannten Schachtschmelzöfen der beschriebenen Art sind in Gießereibetrieben nur für die Roheisenherstellung geeignet, da die im Ofenherd erreichbaren, relativ niedrigen Temperaturen, einen für die Stahlherstellung zu hohen Kohlenstoffanteil in der Liquidusphase bedingen. Gießereiöfen sind aus diesem Grunde nur mit einem maximalen Anteil von weniger als 40% Stahlschrott bezüglich des Einsatzmaterials zu fahren.

Der vorliegenden Erfindung liegt die Aufgabe zugrunde, ein Verfahren und eine Vorrichtung der gattungsgemäßen Art vorzugeben, womit es nicht nur möglich wird, mit beliebigen Schrottkomponenten als Einsatzmaterial zu fahren, sondern beispielsweise auch mit 100 % Stahlschrott und gleichzeitig je nach gewünschter Weiterverarbeitung im Ofenherd wahlweise Flüssigstahl vorgegeben werden kann, bei zusätzlich vereinfachtem und verbessertem Aufbau der Vorrichtung zur Durchführung des Verfahrens.

Die Lösung dieser Aufgabe wird für das Verfahren erfindungsgemäß durch die im Kennzeichen des Anspruches 1 angegebenen Merkmale erreicht. Vorteilhafte Weiterbildungen dieser Aufgabenlösung ergeben sich aus den Unteransprüchen 2 und 3.

In der vorrichtungsgemäßen Ausgestaltung wird die Aufgabe insbesondere durch die im Kennzeichen des Anspruches 4 angegebenen Merkmale erfindungsgemäß erreicht. Vorteilhafte Weiterbildungen und Ausgestaltungen für den Vorrichtungsaufbau ergeben sich aus den übrigen Unteransprüchen.

Dadurch, daß die Abstrahlflächen der Feuerfestauskleidung im Herdofen, gemessen an der Schmelzleistung in Tonnen Einsatzmaterial pro Stunde und hierauf bezogen genau definiert wird, ergeben sich für die Überhitzungsmöglichkeit der Liquidusphase optimale Bedingungen. Die bisherigen Kupolöfen haben unabhängig davon, ob kokslos oder mit Kokseinsatz betrieben, praktisch keine Abstrahlenergie im vorliegenden erfindungsgemäßen Sinne für die Aufheizung der Flüssigphase zur Verfügung, weil dort die Herdwandungen minimal gehalten worden sind. Derartige Schachtöfen sind daher auch nur zur Gusseisenherstellung geeignet, die Verarbeitung von Stahl ist wegen der vorhandenen zu niedrigen Temperaturen unmöglich. Stahlschmelzöfen sind im Gießereibereich mit einem maximalen Anteil an Einsatzmaterial von 40% Stahlschrott gefahren worden unter Inkaufnahme gewisser Schwierigkeiten, höhere Stahlanteile schienen für die Verarbeitung unmöglich.

Zu große Abstrahlflächen der Wandungen im Herdbereich bedingen andererseits hohe Energieverluste über das ff-Material der Wand, so daß in den Ofenschacht selbst eine zu geringe Energiekomponente gelangt und die dort erreichbare Temperatur nicht mehr ausreicht, um den vorhandenen Schrott aufzuschmelzen.

Nicht nur die installierte Leistung, sondern die Aufteilung der Energie auf das Bad und den Schacht ist von ausschlaggebender Bedeutung, damit einerseits genügend Energie im Schacht zum Aufschmelzen des Schrottes zur Verfügung steht und andererseits der Herdraum so dimensioniert ist, daß das aufgeschmolzene Metall auf ausreichend hohe Temperaturen überhitzt werden kann. Hierfür wird eine besonders vorteilhafte Abhängigkeit zwischen der Eintrittstemperatur in den Rekuperator bei Minimierung der Gefahr der Aufoxidation des Einsatzmaterials im Ofenschacht in Abhängigkeit von eben dieser Schütthöhe des Einsatzmaterials hergestellt.

Der Übergang zwischen Ofenschacht und Ofenherd ist entgegen dem Stand der Technik weder ein solcher, der sich durch keinerlei Querschnittsänderung kennzeichnet noch ein solcher, bei dem Ofenschacht und Ofenherd als voneinander getrennte Elemente senkrecht zueinander stehend zusammengefügt sind. Die konzentrische Anordnung des Ofenherdes mit großem Durchmesser zu der des Ofenschachtes mit kleinem Durchmesser in der Weise, daß der Übergang über Schrägflächen erfolgt, die parabolspiegelartige Abstrahlflächen definieren, vereinfacht auch die Feuerfestzustellung und verbessert das Abtropfverhalten des erschmolzenen Metalles im Schmelzaggregat in besonders vorteilhafter Weise. Die Schwierigkeiten, die beim Ausmauern mit dem ff-Material beispielsweise im Flaven-Ofen auftreten, sowie das dort oft beklagte schlechte Abtropfverhalten unterhalb des wassergekühlten Ofenrostes, wird durch die erfindungsgemäße neue Anordnung vermieden. Ein senkrechter runder Querschnitt mündet in einen anderen senkrechten runden ein über einen schräggeführten Wandungsabschnitt, der unmittelbar unterhalb des wassergekühlten Rostes liegt, dessen Dimensionierung wiederum dem geringeren Querschnitt des Ofenschachtes entspricht. Die Gasanström-Verhältnisse im Schacht über dem Rost werden in diesem Zusammenhang gleichfalls vorteilhaft beeinflußt. Die Schütthöhe des Einsatzmaterials, insbesondere des Stahlschrotts, muß im Gegensatz zur bekannten Lehre zum Handeln nicht mehr maximiert werden, sondern - was für das hier interessierende Einsatzmaterial besonders wichtig ist - kann sogar minimiert werden, da der Wärmetauschereffekt über die Schüttsäule keinen primären Einfluß auf den Verfahrensablauf mehr hat, sondern vielmehr über Wärmetauscher das Luftgemisch für die Brenner so vorgeheizt wird, daß mit den genannten geringen Chargenhöhen oberhalb des Rostes gefahren werden kann. Die Eintrittstemperatur des Abgases in den Rekuperator wird einerseits durch die Schütthöhe des Schrottes sowie dessen Beschaffenheit gesteuert, andererseits durch die Nachverbrennung und die Kühlluftzugabe. Der große Einfluß den die Wärmeverteilung der Brenner einmal auf dem Schacht und zum anderen auf dem Unterofen bei geeigneter Aufteilung dieser beiden Komponenten hat, findet bei der vorliegenden Verfahrensweise unter Beachtung der neuartigen konstruktiven Merkmale seine volle Unterstützung.

Infolge der hohen Temperaturen die erreicht sind, können beispielsweise im Schacht auch andere, als Verunreinigungen im Einsatzmaterial vorliegende Metallkomponenten, wie Zink verdampft werden, wobei solche Anteile dann in einer Nachbrennkammer vollständig ausoxidierbar sind und somit schließlich zu Bestandteilen der anfallenden Staubasche werden, die ihrerseits in Abscheidern festgehalten und damit ausgeschleust werden kann. Je nach Anreicherung solcher Kontaminationen an bestimmten Grob- und/oder Feinstaubbeschaffenheiten kann in diesem Zusammenhang schließlich auch fraktioniert gefiltert oder anderweitig ausgeschleust werden.

Um im Metallbad jeden gewünschten Kohlenstoffgehalt einstellen zu können und gleichzeitig die Verschlackung des Einsatzmaterials an der Badoberfläche zu unterdrücken, können Kohlenstoffträger in das Metallbad eingeblasen werden, wofür sowohl Unterbaddüsen als auch oberhalb der Badoberfläche oder unterhalb der Badoberfläche einsetzbare Lanzen geeignete Vorrichtungen sind. So gelingt es ohne Schwierigkeiten beispielsweise aus dem Einsatzmaterial wahlweise sowohl Stahl als auch Gusseisen herstellen zu können.

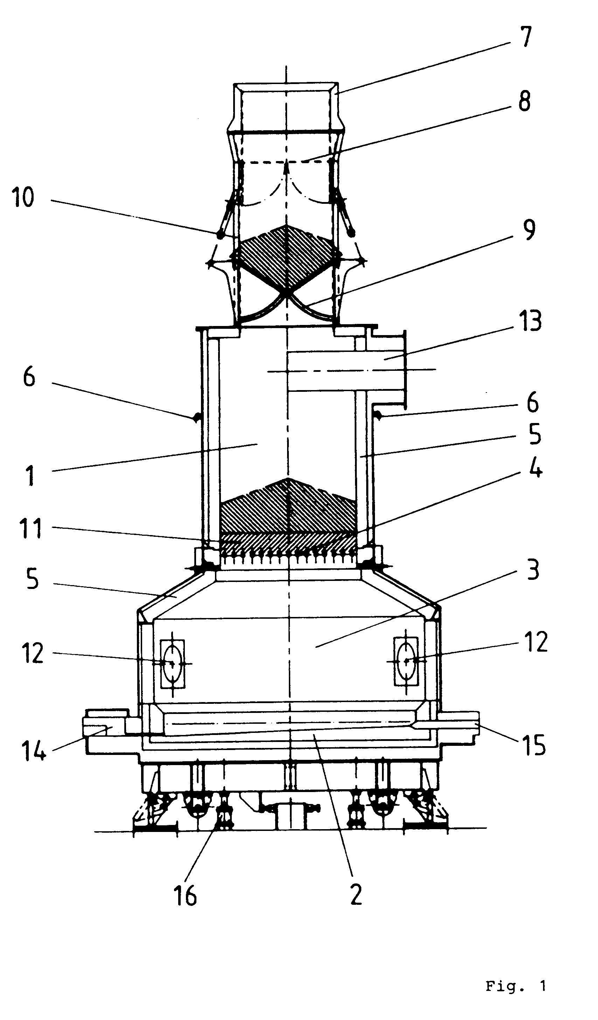

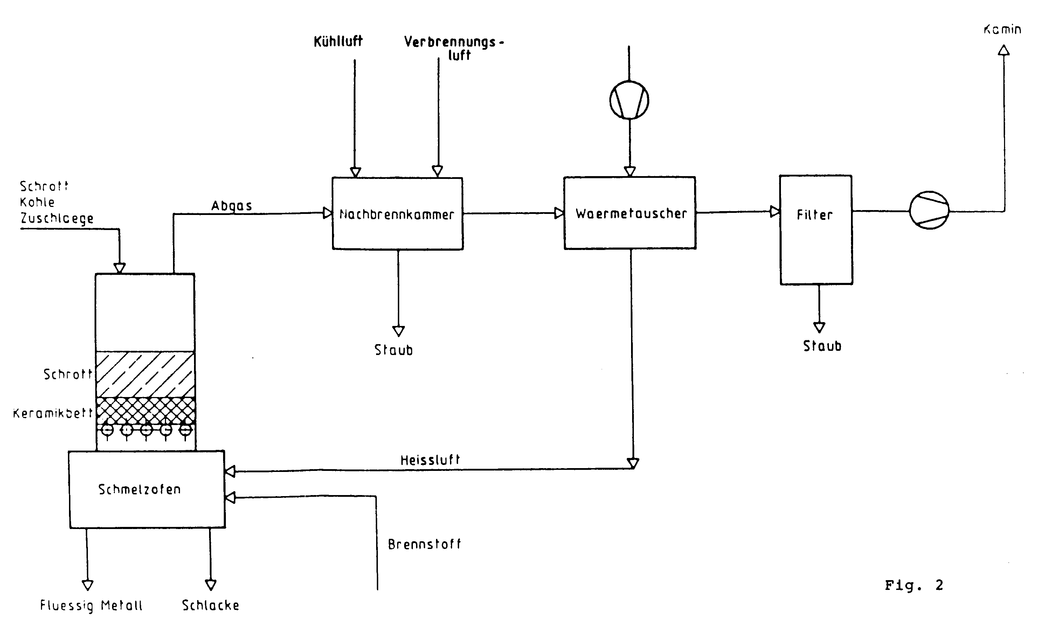

Anhand der beiliegenden Zeichnungen, Fig. 1 + 2, die eine beispielsweise Möglichkeit für den Verfahrensablauf bzw. für den konstruktiven Aufbau des Schmelzaggregats in schematischer Wiedergabe darstellt, soll die vorliegende Erfindung näher erläutert werden.

Wie der Längsschnitt durch einen erfindungsgemäßen Schrottschmelzofen in Fig. 1 zeigt, besteht dieser im wesentlichen aus dem Ofenschacht 1, dem Ofenherd 2, dem Herdraum 3 und dem dazwischen befindlichen wassergekühlten Rost 4. Sowohl der Schacht als auch der Herd bzw. der Herdraum sind mit feuerfestem (ff)-Material 5 ausgekleidet. Zusätzlich kann über eine Ringleitung 6 eine Außenkühlung durch Spritzwasser erfolgen. Der Ofenschacht wird mittels eines Kübels 7, der über einen Bodenverschluß 8 geöffnet werden kann, mit Schrott chargiert. Zum gasdichten Verschluß des Ofens ist der Ofenschacht mit einem Klappenverschluß 9 versehen, auf der der Schrott zunächst festgehalten wird. Nach dem Aufsetzen des vollen Kübels 7 auf den Füllschacht 10 wird die Klappe 9 geöffnet und der Schrott fällt auf die über dem Rost 4 befindliche Keramikschüttung 11. Im Herdraum 3 erzeugen Brenner 12 heiße Verbrennungsgase, deren Temperatur weit über dem Schmelzpunkt des Schrotts liegt. Diese Gase strömen durch den Rost 4 und die Keramikschüttung 11 und schmelzen den Schrott auf. Das Gas durchströmt dann die Schrottschüttung und verläßt den Ofen über die Abgasleitung 13. Das gebildete flüssige Metall tropft durch die Keramikschüttung 4 und wird dort noch überhitzt, ehe die Tropfen auf den Herd 2 fallen. Das sich auf dem Herd sammelnde flüssige Metall wird durch die Gasstrahlung im Herdraum 3 und durch die Strahlung der Herdraumwände und zum geringeren Teil durch Konvektion überhitzt.

Das flüssige Metall wird über die Abstichöffnungen 14 und die flüssige Schlacke über die Öffnung 15 aus dem Ofen entfernt.

Der Herd des Ofens kann bei vorzeitigem Verschleiß über eine Hydraulikvorrichtung 16 abgesenkt werden und durch einen neu zugestellten Herd ersetzt werden.

Das heisse Abgas wird entsprechend Fig. 2 in einer Nachbrennkammer nachverbrannt und mit Kühlluft auf die geeignete Temperatur (Rekueintritt) abgemischt. Mit der fühlbaren Wärme des Abgases wird in einem nachgeschalteten Wäremtauscher die Verbrennungsluft vorgewärmt.

Der anfallende Staub wird anschliessend in einem Filter ausgeschleust.

## Patentansprüche

1. Verfahren zum Schmelzen von hochschmelzendem Metallschrott, insbesondere Stahl-Schrott, in einem kokslos mittels fluider Brennstoffe betriebenen Schachtofen, dessen Ofenschacht von dem sich unter diesen anschließenden Ofenherd mittels einer gekühlten Rostanordnung getrennt ist, wobei die Brenner im wesentlichen senkrecht zur Schachtlängsachse in den Ofen einmünden und die Verbrennungsluft rekuperativ über die Abgase des Schachtofens vorgewärmt wird,
dadurch **gekennzeichnet,**
daß die in das Schmelzaggregat über die Brenner eingebrachte Wärmemenge definiert dosierbar auf eine in den Ofenschacht abgeleitete Komponente und eine im Ofenherd verbleibende Komponente aufgeteilt wird dadurch, daß

    a) die Abstrahlfläche der ff-Wandauskleidung im Ofenherd zwischen 1,8 und 3,5 m$^2$ pro Stunde eingesetzten Tonnen Einsatzmaterial gewählt wird, und
    b) die Eintrittstemperatur des Abgases in den Rekuperator in Abhängigkeit von der Schütthöhe des Einsatzmaterials im Ofenschacht gesteuert wird, wobei die Schütthöhe von der eingesetzten Schrottsorte abhängig ist und die Schütthöhe so eingestellt wird, daß die Eintrittstemperatur in den Rekuperator zur Minimierung der Aufoxidation des Einsatzmaterials im Ofenschacht in Verbindung mit der genannten Minimierung der Schütthöhe und in Abhängigkeit einer Lufteintrittstemperatur für die Brenner in den Ofenherd zwischen 800 bis 900°C eingestellt wird.

2. Verfahren nach Anspruch 1,
dadurch gekennzeichnet, daß die Wärmeübertragung auf das Bad der Flüssigphase zu 80 bis 90 %, vorzugsweise 85 %, durch Strahlung und zu 10 bis 20 %, vorzugsweise 15 %, mittels Konvektion erfolgt, wobei - bezogen auf den Herdraum - sich der Strahlungsanteil aus ca. 25 % Gasstrahlung und 50 bis 80 %, vorzugsweise 75 % Wandstrahlung zusammensetzt.

3. Verfahren nach Anspruch 1 und 2,
dadurch gekennzeichnet, daß die Temperatur im Ofenschacht wenigstens auf die Höhe der Verdampfungstemperatur von Zink eingestellt wird, wobei eine gegebenenfalls vorhandene Zinkkomponente im Schacht verdampft und in der Nachbrennkammer vollständig oxidiert wird, so daß sie sich aus der anfallenden Staubphase nachfolgend abtrennen läßt.

4. Ofen zur Durchführung des Verfahrens nach mindestens einem der Ansprüche 1 bis 3, enthaltend einen vertikalen Ofenschacht und einen Ofenherd, voneinander getrennt durch einen gekühlten Rost,
dadurch **gekennzeichnet,**
daß der unmittelbar an die gekühlte Rostanordnung des Ofenschachtes anschließende Ofenherd sich nach unten hin zunächst im Querschnitt konzentrisch mit parabolspiegelartiger bzw. abgeschrägter Abstrahlfläche erweitert, dabei die Winkelneigung so gewählt ist, daß sich ihre Abstrahlrichtung etwa auf den Mittelbereich der Liquidusphase am Herdboden richtet, und anschließend, wenigstens im Brennbereich, in einen senkrechten, im Durchmesser entsprechend vergrößerten zylindrischen Abschnitt übergeht.

5. Ofen nach Anspruch 4,
dadurch gekennzeichnet, daß die Flammenquerschnitte des bzw. der Brenner senkrecht zur Abstrahlfläche der Ofenwandungen minimiert sind.

6. Ofen nach Anspruch 4,
dadurch gekennzeichnet, daß die Brenner tangential waagerecht, vorzugsweise bis max. 10° leicht gegen die Decke geneigt angeordnet sind.

7. Ofen nach wenigstens einem der Ansprüche 4 bis 6,
dadurch gekennzeichnet, daß der Ofenschacht ein zylindrischer Schacht ist, dessen runder Querschnitt über den sich parabolspiegelartig erweiternden oberen Abschnitt im Ofenherd und zum unteren Abschnitt des Ofenherdes hin kontinuierlich in den dort vergrößerten Querschnitt übergeht.

8. Ofen nach wenigstens einem der Ansprüche 4 bis 7,
dadurch gekennzeichnet, daß hinter dem Ofenschacht eine Nachbrennkammer zur Verbrennung von vorhandenen Verunreinigungen in oxidierender Atmosphäre vorgesehen ist.

9. Ofen nach wenigstens einem der Ansprüche 4 bis 8,
dadurch gekennzeichnet, daß die Höhe des Herdofens so bemessen ist, daß die mittlere aktive Schichtdicke des Gases im Feuerraum oberhalb des Flüssigmetalls zwischen 1,5 bis 3,5 m, vorzugsweise 2 bis 2,5 m, liegt, wobei unter der mittleren aktiven Schichtdicke der mittlere Abstand der abgeschrägten wärmestrahlenden Wandung des Feuerfestmaterials im Ofenraum von der Badoberfläche zu verstehen ist.

10. Ofen nach wenigstens einem der Ansprüche 4 bis 9,
dadurch gekennzeichnet, daß die Abstrahlfläche zwischen 2 und 2,8 m² gewählt wird.

11. Ofen nach wenigstens einem der Ansprüche 4 bis 10,
dadurch gekennzeichnet, daß mittels Unterbaddüsen und/oder an sich bekannten Lanzeneinrichtungen kohlenstoffhaltige Komponenten in das Metallbad innerhalb des Ofens einbringbar sind.

## Claims

1. Process for melting high-melting scrap metal, in particular scrap steel, in a coke-free furnace, operated by means of fluid fuels, the furnace shaft of which is separated from a thereunder adjacent open hearth by means of a cooled grate arrangement, in which respect the burners terminate in the furnace substantially vertically to the longitudinal axis of the shaft and the combustion air is recuperated and preheated via the waste gases of the furnace, **characterised in that** the heat quantity fed into the melting element via the burner is divided apportionably defined relative to a component diverted into the furnace shaft and to a remaining component in the open hearth, in that
   a) the deflection surface of the ff-wall lining in the open hearth is chosen to be between 1.8 and 3.5 m² per hour applied resource material, and
   b) the entry temperature of the waste gas into the recuperator is controlled in dependence of the loading height of the resource material in the furnace shaft, whereby the loading height is dependent on the used type of scrap and the loading height is set so that the entry temperature into the recuperator is set to minimise the oxidation of the resource material in the furnace shaft in conjunction with the aforementioned minimisation of the loading height and in dependence of an air-intake temperature for the burners into the open hearth between 800 and 900 ° C.

2. Process according to claim 1, **characterised in that** the heat transfer to the bath of the liquid phase is carried out between 80 and 90%, preferably 85%, by radiation, and betwen 10 and 20%, preferably 15%, by way of convection, whereby, with reference to the hearth area, the proportion of radiation is composed of approximately 25% gas radiation and between 50 and 80%, preferably 75%, wall radiation.

3. Process according to claim 1 and 2, **characterised in that** the temperature in the furnace shaft is set to at least the level of the evaporation temperature of zinc in which a zinc component in the shaft will evaporate and completely oxidise in the afterburner chamber, so that it can be separated from the developing dust phase.

4. Furnace for carrying out the process according to at least one of the claims 1 to 3, comprising a vertical furnace shaft and an open hearth, separated from each other by a cooled grate, **characterised in that** the open hearth, which is directly adjacent to the cooled grate arrangement of the furnace shaft, initially widens downwards concentrically in its cross-section with parabolic or slanted deflection surface, in which respect the angular slant is chosen so that its direction of deflection is oriented approximately towards the central area of the liquid phase at the furnace bottom, and subsequently transits, at least in the furnace region, into a vertical section which in its diameter corresponds with the enlarged cylindrical section.

5. Furnace according to claim 4, **characterised in that** the flame cross-sections of the burner(s) vertically to the deflection surface of the furnace walls are minimised.

6. Furnace according to claim 4, **characterised in that** the burners are arranged tangentially horizontally, preferably slightly slanted towards the top by up to maximum 10 ° .

7. Furnace according to at least one of the claims 4 to 6, **characterised in that** the furnace shaft is a cylindrical shaft, the round cross-section of which transits continuously via the parabolically widening upper section in the open hearth and towards the lower section of the open hearth into thereat enlarged cross-section.

8. Furnace according to at least one of the claims 4 to 7, **characterised in that** behind the furnace shaft is provided an afterburner chamber for the combustion of impurities present in an oxydising atmosphere.

9. Furnace according to at least one of claims 4 to 8, **characterised in that** the height of the open hearth is dimensioned so that the middle active layer thickness of the gas in the furnace area is positioned above the fluid metal between 1.5 and 3.5 m, preferably between 2 and 2.5 m, in which respect the middle active layer thickness is understood to be the middle distance between the slanted heat-radiating wall of the fireproof material in the furnace chamber and the bath surface.

10. Furnace according to at least one of claims 4 to 9, **characterised in that** the deflection surface is chosen to be between 2 and 2.8 m$^2$.

11. Furnace according to at least one of claims 4 to 10, **characterised in that** carbon containing components are entered into the metal bath within the furnace by means of nozzles underneath the bath and/or conventional lance devices.

**Revendications**

1. Procédé de fusion de déchets métalliques, notamment de déchets d'acier, à point de fusion élevé, dans un four à cuve qui travaille sans coke et au moyen de combustibles fluides et dont la cuve de four est séparée du foyer de four, se raccordant au-dessous de cette dernière, au moyen d'un agencement de grille refroidi, tandis que les brûleurs débouchent dans le four d'une manière pratiquement perpendiculaire à l'axe longitudinal de la cuve et que l'air de combustion est préchauffé, d'une manière récupérative, au moyen des gaz brûlés du four à cuve,
caractérisé

en ce que la quantité de chaleur introduite dans l'ensemble de fusion au moyen des brûleurs est répartie, d'une manière définie et pouvant être dosée, en une composante envoyée dans la cuve de four et une composants restant dans le foyer de four,
du fait que

a) la surface de rayonnement du garnissage réfractaire de paroi dans le foyer de four est choisie à une valeur comprise entre 1,8 et 3,5 m$^2$ par tonne de matière de charge introduite par heure et que

b) la température d'entrée des gaz brûlés dans le récupérateur est réglée en fonction de la hauteur de chargement de la matière de charge dans la cuve de four, tandis que cette hauteur de chargement dépend de la nature des déchets introduits et qu'elle est réglée de façon telle que la température d'entrée dans le récupérateur soit réglée de façon à rendre minimale l'oxydation, dans la cuve de four, de la matière introduite, en liaison avec l'action indiquée rendant minimale la hauteur de chargement et en fonction d'une température d'entrée d'air pour les brûleurs situés dans le foyer de four qui est comprise entre 800 et 900 °C.

2. Procédé suivant la revendication 1, caractérisé en ce que le transfert de chaleur au bain de la phase liquide a lieu à raison de 80 à 90 %, de préférence 85 %, par rayonnement et à raison de 10 à 20 %, de préférence 15 %, par convection, tandis que, rapportée à la chambre du foyer, la proportion de rayonnement se compose d'environ 25 % de rayonnement par les gaz et 50 à 80 %, de préférence 75 %, de rayonnement par les parois.

3. Procédé suivant la revendication 1 et 2, caractérisé en ce que la température dans la cuve de four est réglée au moins au niveau de la température de vaporisation du zinc, de sorte qu'un composant de zinc se présentant éventuellement est vaporisé dans la cuve et est totalement oxydé dans la chambre de postcombustion, de sorte qu'il peut ensuite être séparé de la phase de poussières se présentant.

4. Four de mise en oeuvre du procédé suivant au moins l'une des revendications 1 à 3, comportant une cuve de four verticale et un foyer de four, séparés l'un de l'autre par une grille refroidie,
caractérisé

en ce que le foyer de four, se raccordant directement à l'agencement de grille refroidi de la cuve de four, s'élargit d'abord vers le bas en section transversale d'une manière concentrique, en comportant des surfaces de rayonnement en forme de miroir parabolique ou inclinées, l'angle d'inclinaison étant choisi de façon telle que sa direction de rayonnement est dirigée à peu près vers la zone centrale de la phase liquide sur le fond du foyer, et en ce qu'ensuite, au moins dans la zone de combustion, elle se raccorde à un tronçon cylindrique vertical ayant un diamètre augmenté en conséquence.

5. Four suivant la revendication 4, caractérisé en ce que les sections transversales des flammes du ou des brûleurs sont rendues mini-males perpendiculairement à la surface de rayonnement des parois du four.

6. Four suivant la revendication 4, caractérisé en ce que les brûleurs sont disposés d'une manière tangentielle horizontale, de préférence en étant inclinées légèrement vers la voûte, jusqu'à un maximum de 10°.

7. Four suivant au moins l'une des revendications 4 à 6, caractérisé en ce que la cuve de four est une cuve cylindrique dont la section transversale circulaire, par l'intermédiaire du tronçon supérieur s'élargissant en forme de miroir parabolique dans le foyer de four et vers le tronçon inférieur du foyer de four, se raccorde d'une manière continue à la section transversale qui augmente dans ce dernier.

8. Four suivant au moins l'une des revendications 4 à 7, caractérisé en ce qu'en aval de la cuve de four, il est prévu une chambre de postcombustion permettant la combustion d'impuretés existantes dans une atmosphère oxydante.

9. Four suivant au moins l'une des revendications 4 à 8, caractérisé en ce que la hauteur du foyer de four est dimensionnée de façon que l'épaisseur de couche active centrale du gaz dans la chambre de foyer audessus du métal liquide est comprise entre 1,5 et 3,5 m, de préférence 2 et 2,5 m, alors que, par épaisseur de couche active centrale, il faut comprendre la distance centrale de la paroi inclinée, rayonnant la chaleur, du matériau réfractaire dans la chambre du four par rapport à la surface du bain.

10. Four suivant au moins l'une des revendications 4 à 9, caractérisé en ce que la surface de rayonnement est choisie à une valeur comprise entre 2 et 2,8 $m^2$.

11. Four suivant au moins l'une des revendications 4 à 10, caractérisé en ce que des composants contenant du carbone peuvent être introduits dans le bain métallique, à l'intérieur du four, au moyen de buses disposées au-dessous du bain et/ou de dispositifs à lance connus en soi.

7

8

10

9

13

6

6

5

1

4

11

5

3

12

12

14

15

16

2

Fig. 1

Kühlluft   Verbrennungs-luft                    Kamin

Schrott
Kohle          Abgas      Nachbrennkammer    Waermetauscher    Filter
Zuschlaege

Schrott

Keramikbett

Schmelzofen                     Heissluft

                    Brennstoff

Fluessig Metall    Schlacke

Staub                                          Staub

Fig. 2

EP 0 320 587 B1